# EUROPEAN PATENT SPECIFICATION

(11) **EP 1 087 878 B1**
(45) Date of publication and mention of the grant of the patent: **25.08.2004**
(21) Application number: 99928650.3
(22) Date of filing: 14.06.1999
(51) Int. Cl.: B60R 1/00, B60R 21/18, B60R 22/12, B60R 22/18, B60R 22/26

(54) **BELT SYSTEM WITH INFLATABLE SECTION WITHIN AN OUTER BELT SECTION AND METHOD OF RESTRAINT**
GURTSYSTEM MIT AUFBLASBAREM ABSCHNITT INNERHALB EINES AUSSENABSCHNITTES EINES GURTES SOWIE VERFAHREN ZUR INSASSENSICHERUNG
SYSTEME DE CEINTURE DOTE D'UNE PARTIE GONFLABLE SITUEE AU SEIN D'UNE PARTIE DE CEINTURE EXTERIEURE ET METHODE DE RETENUE

(30) Priority: 18.06.1998 US 99858
(43) Date of publication of application: 04.04.2001
(73) Proprietor: Universal Propulsion Company, Inc., Phoenix, AZ 85027-7899 (US)
(72) Inventor: HAMMER, David, R., Glendale, AZ 85310 (US); MCCLENATHAN, Robert, V., Scottsdale, AZ 85254 (US); SMITH, A., Gary, Glendale, AZ 85306 (US)
(74) Representative: Naismith, Robert Stewart
(86) International application number: PCT/US1999/013399
(87) International publication number: WO 1999/065733

(56) References cited:
- WO-A-97/23367
- US-A- 3 869 145
- US-A- 4 348 037
- US-A- 4 741 574
- US-A- 5 303 953
- US-A- 5 383 713
- US-A- 5 474 326
- US-A- 5 839 753
- US-A- 5 851 055

## Description

This invention generally relates to safety restraint systems and more particularly to inflatable occupant safety restraint systems for use in vehicles.

### Background of Invention

Inflatable seat belts have included perforated fabrics (U.S. Patent No. 3,801,156)). Other belts have included folded woven fabric bodies within a rupturable cover (U.S. Patent No. 5,346,250). Inflatable belts have been pleated and stitched for use prior to inflation reinforcing material (U.S. Patent No. 3,866,940).

US-A-5 303 953 disclose a belt restraint system for use in a vehicle having a seat for an occupant having a torso wherein the belt restraint system comprises:
a belt member for restraining said occupant during vehicle deceleration which belt member is loaded by forces required to decelerate said occupant, wherein a portion of said belt member is located within said belt member enclosure;
said belt member including an outer belt component and an inner inflatable belt component, which components are connected to one another at spaced apart locations;
a portion of the outer belt component being frangible to create an opening when such portion is stressed; and
an inflator in communication with the inner inflatable component for inflating such component,
whereby when the inflator at least partially inflates the inner inflatable component, the belt components share the load of the belt member during a deceleration period, and whereby the outer component ruptures due to inflation stress creating an opening allowing the inner inflatable component to exit such opening to provide an inflatable belt section for occupant restraint.

Prior inflatable seat belts have included decorative covers which had little or no load bearing ability. Further, the attachment between the inflatable sections and the non-inflatable sections in prior belts lacked sufficient reinforcement to withstand the high loading occurring during a crash.

### Summary of the Invention

Broadly, the present invention comprises a vehicle seat and seat belt system as defined in claim 1 including (1) a tubular webbing made of fabric or other suitable material having strength characteristics, not unlike a conventional seat belting, and (2) having an inflatable tube, bladder or other inflatable component positioned in the tubular webbing. The outer tubular webbing component is longitudinally frangible to allow the inner inflatable component, as it is inflates, to exit through a rupture opening in the tubular webbing during the period of vehicle deceleration pending a crash. The pressure and forces of the inflation of the inner component cause the outer tubular webbing to rupture. The combination of outer tubular webbing and inner inflatable component may be used in a torso section, a lap section or both.

The belt system may be used in combination with a structural seat having a frame in which a belt enclosure and anchor are positioned behind the occupant and secured to the seat frame. The enclosure houses the torso section of the belt system which torso section includes the outer and inner belt components. An inflator may be positioned within the inner inflatable components. The amount of belting withdrawn from the enclosure depends on the size of the occupant as he or she buckles up.

Alternatively, the belt enclosure and anchor may be mounted on other portions of the vehicle including its frame.

The invention also relates to a method of restraining an occupant as defined in claim 18.

### Brief Description of the Drawings

Fig. 1 is a perspective view of the vehicle seat with a belt system of the present invention;
Fig. 2 is the same view of Fig. 1 in which the belt system is being buckled up around and without the occupant being shown;
Fig. 3 is a rear perspective view of the seat frame, rear belt enclosure and anchor mounted to the seat;
Fig. 4 is a broken-away perspective view of that portion of the belt including an inflator which portion resides in the belt enclosure;
Fig. 4a is a sectional view taken along line 4a-4a of Fig. 4;
Fig. 4b is a sectional view taken along line 4b-4b of Fig. 2;
Fig. 5 is a perspective view of the seat of Fig. 1 with the torso section of the belt system inflated;
Fig. 6 is a side sectional elevation view of the torso belt section inflated;
Fig. 6a is a sectional view through line 6a-6a of Fig. 6;
Fig. 6b is a sectional view along line 6b-6b of Fig. 6;
Fig. 6c is a sectional view similar to Fig. 6b after inflation and the load of the occupant's torso applied against the inflated belt component;
Fig. 7 is a side sectional view of the torso belt portion prior to activation of the inflator;
Fig. 8 is an enlarged view of the torso belt with a tubular outer belt expanded by inflation of the inner component as supplied with gas;
Fig. 9 is a perspective view of a portion of the fabric of the outer tubular belt component;
Fig. 10 is a plan view of the portion and the fabric of the outer tubular belt component;
Fig. 11 is a plan view of a portion of the alternative fabric of the outer belt component;
Fig. 12 is a perspective view of the alternative fabric; and
Fig. 13 is a perspective view of another embodiment of the present invention in which the belt enclosure is mounted adjacent the seat on the vehicle frame.

### Detailed Description of the Invention

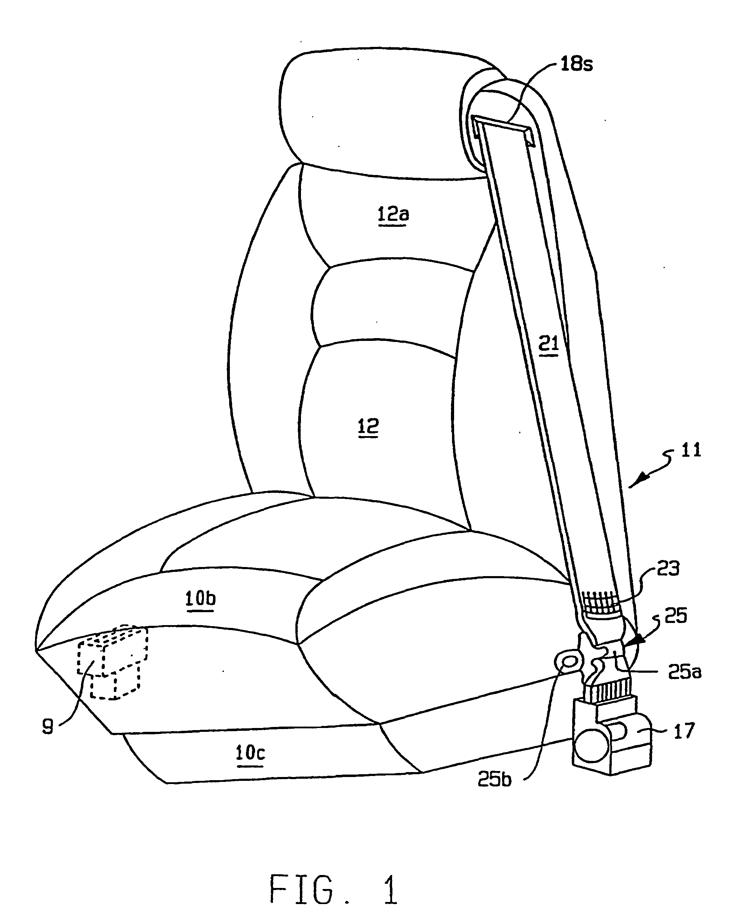

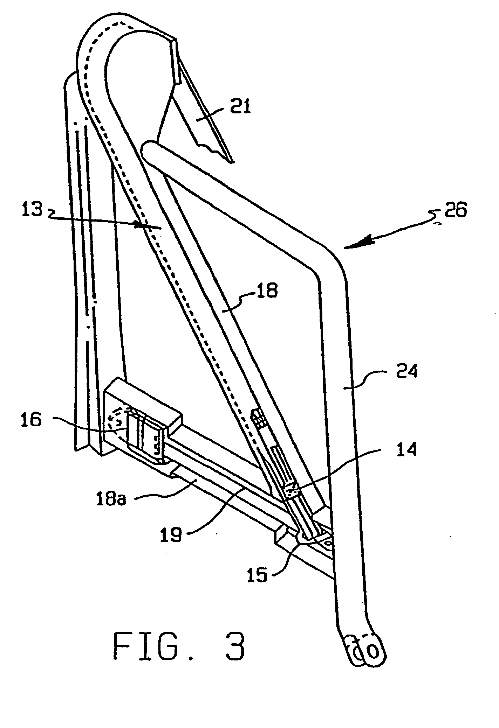

With respect to Figs. 1-3, vehicle structural seat 10 includes a belt system 11 in turn comprising occupant restraint belt 13 including torso section 21 and lap section 22. Torso section 21 has, in its unbuckled mode, two ends with one end connected to back take-up retractor anchor reel 16 positioned behind a seated occupant (Fig. 3) and the other end connected to a side anchored buckle 9 (Fig. 1). Torso section 21 reciprocally moves in belt guide enclosure 18 as the length of belt component 19 pays out and back into retractor anchor 16. Belt enclosure 18 and anchor 16 are secured to seat frame 24.

Torso section 21 includes tandemnly connected rear belt portion 19 (which changes direction as it passes around guide ring 15). Torso section 21 extends from belt stitching 23 adjacent seat side reel anchor 17 upwardly alongside the occupant's torso into enclosure slot 18s and includes belt portion 19 attached by stitching 14. Belt portion 19 is preferably made of conventional belt webbing. Inflator 20 is held within belt section 21 and moves along with torso section 21 as it reciprocates. The position of inflator 20 in the buckled up mode therefore depends on the amount of torso section 21 utilized by the occupant as he or she buckles up which amount varies with the occupant's size and shape.

Lap section 22 has a tongue connector 25 with belt holding opening 25a and tongue 25b. Vehicle seat 10 also includes seat portion 10a, back portion 12 with upper back portion 12a, base portion 10c and frame 26 (Fig. 3). A structural seat including enclosure belt guides is described in US-A-5 851 055 filed March 13, 1997 entitled "Inflatable Passenger-Size Adjustable Torso Belt System Including Enclosure Mount and Method of Passenger Restraint". Also shown is guide enclosure 18, upper enclosure slot opening 18s and gas-creating and discharging inflator 20.

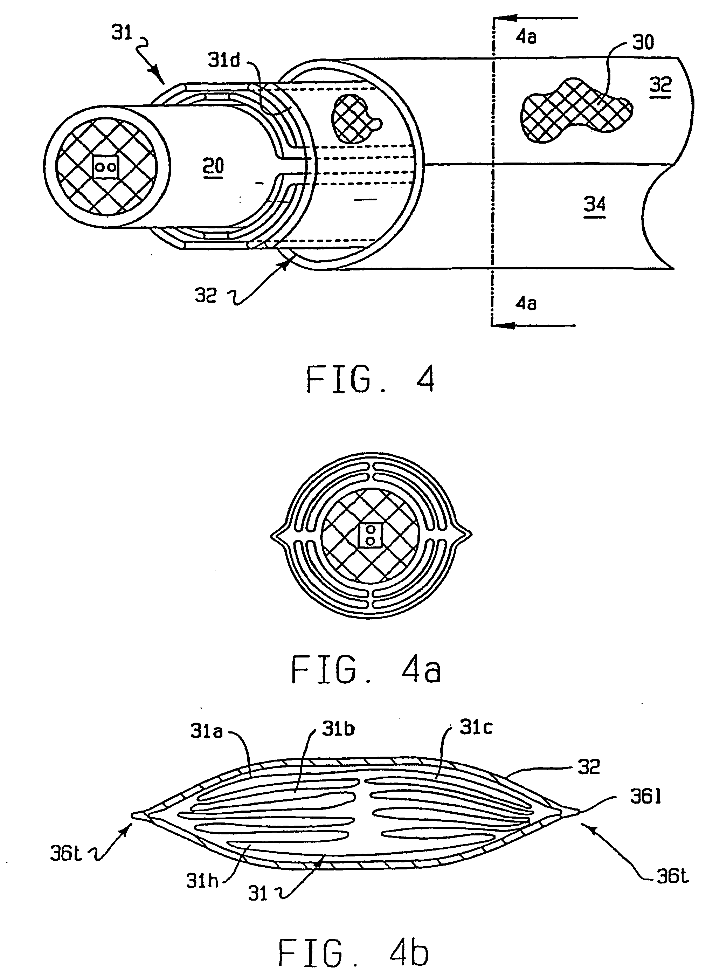

Turning now to Figs. 4-6, torso section 21 includes an outer tubular belt component 32 and an inner belt component 31 which inner component 31 is folded for storage within outer component 32. Inner inflatable component 31, when inflated, has a diameter to width of outer belt component 32 ratio in the range of three to four which range may be as high as five or six. Component 31 as stored includes folds 31a-31h (Figs. 4, 4a and 4b). Fig. 4a shows a belt cross section within enclosure 18 while Fig. 4b shows a cross section of the belt section 21 across the occupant's torso. Belt component 32 has tits 32t on either side. Frangible line (fiber) 361 lies in one of tits 32t. Torso belt inflation should be large enough in diameter and length to push the occupant back in his or her seat but not large enough to press occupant against the seat to the extent injury would occur due to such torso belt inflation. As a crash event loads torso belt section 21, the load is shared by both (1) the outer tubular component 32 and (2) the inner inflated (partially or completely) component 31. Partial inflation occurs within enclosure 18 due to the restraint enclosure 18 provides.

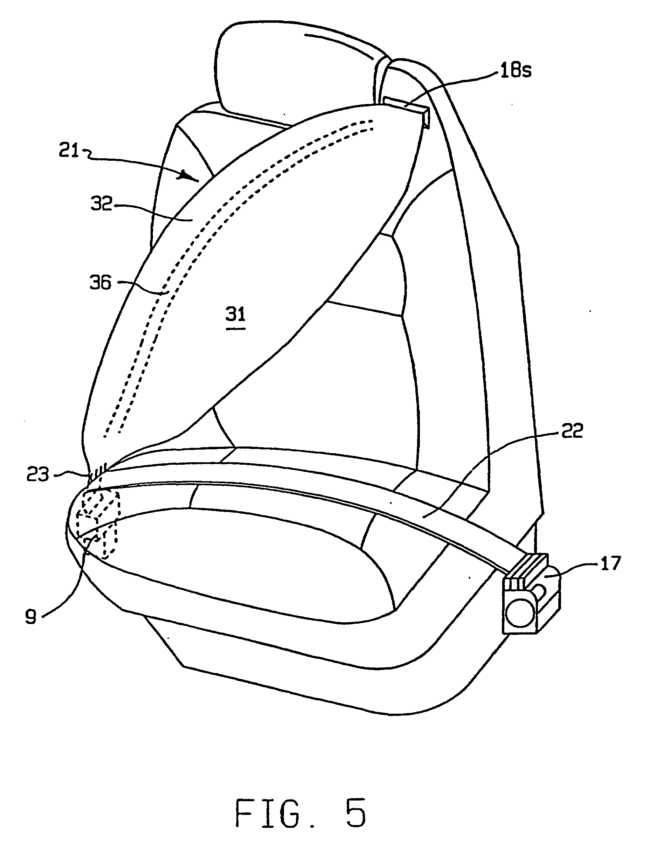

In the first and earliest phase of a crash, inflator 20 is caused to supply gases to inner component 31 which starts to inflate exerting pressure on the inner walls of outer component 32. When the pressure reaches a certain level the outer component 32 ruptures along frangible line 361 and the inner belt portion 31 starts to exit through the ruptured area 36 (Fig. 5). Frangible line 361 is preferably along an edge of inner component 32 (Fig. 4a). The rupturing of outer belt component 32 substantially reduces its ability to withstand loads without substantial elongation.

As vehicle and occupant deceleration continues, outer belt component 32 begins to stretch due to forces created by the occupant while at the same time the inner belt component 31 begins to pretension and foreshorten as it takes up a portion of the load. In the next phase when the inflating component 31 has deployed further, inner belt component 31 takes more load and the outer belt component 32 carries less load. Finally, when the inner component 31 is fully deployed, the inner component 31 assumes substantially all the load (from 60%-90%). Since outer and inner components share the crash load, each can be made thinner, lighter and of lower strength than a conventional vehicle restraint belting. Components 31, 32 may be made of any suitable material. The preferred material is woven fabric such from polyester or nylon fibers or threads. The outer tubular section 32 has a strength of 1360.8 - 3039.1 kg (3,000 to 6,700 lbs.) and an elongation of less than 10% at 1134.0 kg (2,500 lbs). Frangible warp fiber 37 has a low denier of 50 to 420.

Full inflation of torso section 21 occurs between stitching 23 (Fig. 5) and stitching 14 (Fig. 3) with inflation of the inner component 31 and its deployment outside outer component 32 occurring between stitching 23 and enclosure exit 18s (Fig. 5).

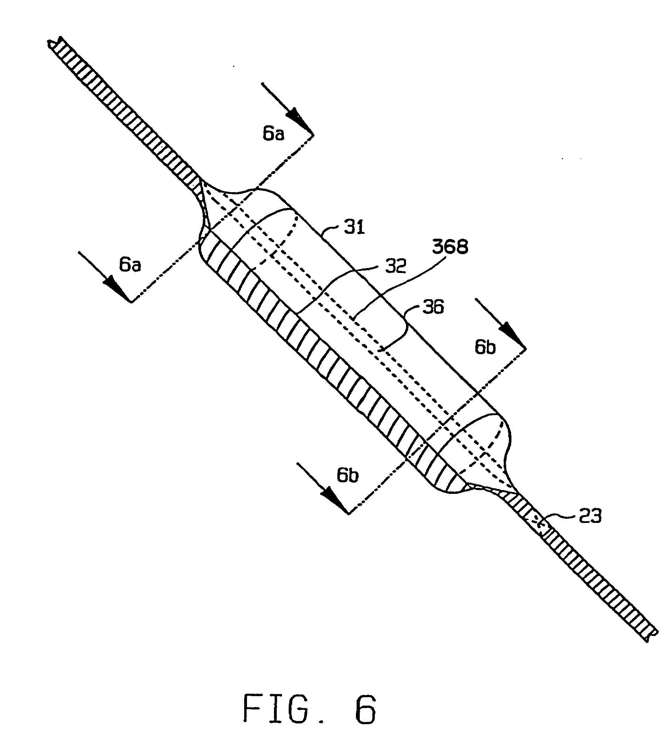

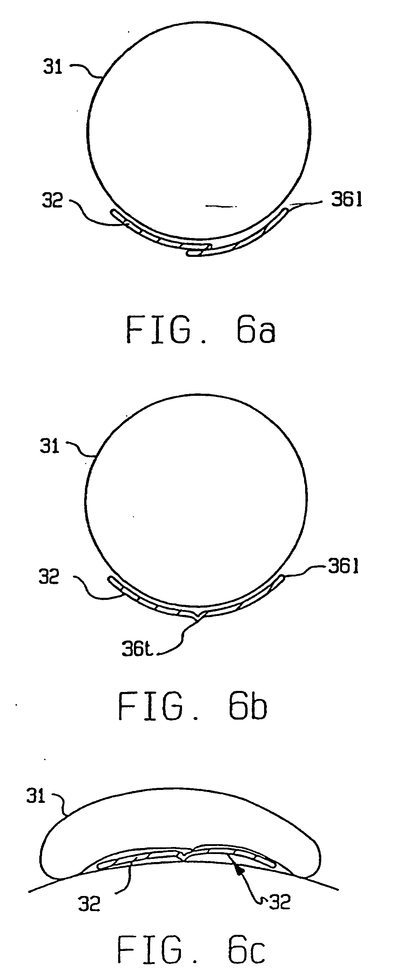

Figs. 6, 6a, 6b and 6c show the inner component 31 deployed through slot 36 formed by the rupture of outer belt component 32. Limited inflation occurs within belt enclosure 18 utilizing some of the gases discharged by inflator 20 but the great majority of gases provided by inflator 20 inflate the portion of inner component 31 shown in Figs. 5 and 6 for torso restraint.

In Fig. 6c, the operation of deployed inner inflated component 31 after outer component 32 has stretched due to its weakened condition includes component 31 coming into contract with occupant's torso (T) to arrest forward torso movement. The shape of inflated component 31 is changed from circular to oval shaped by the forces required to arrest the occupant's torso (T).

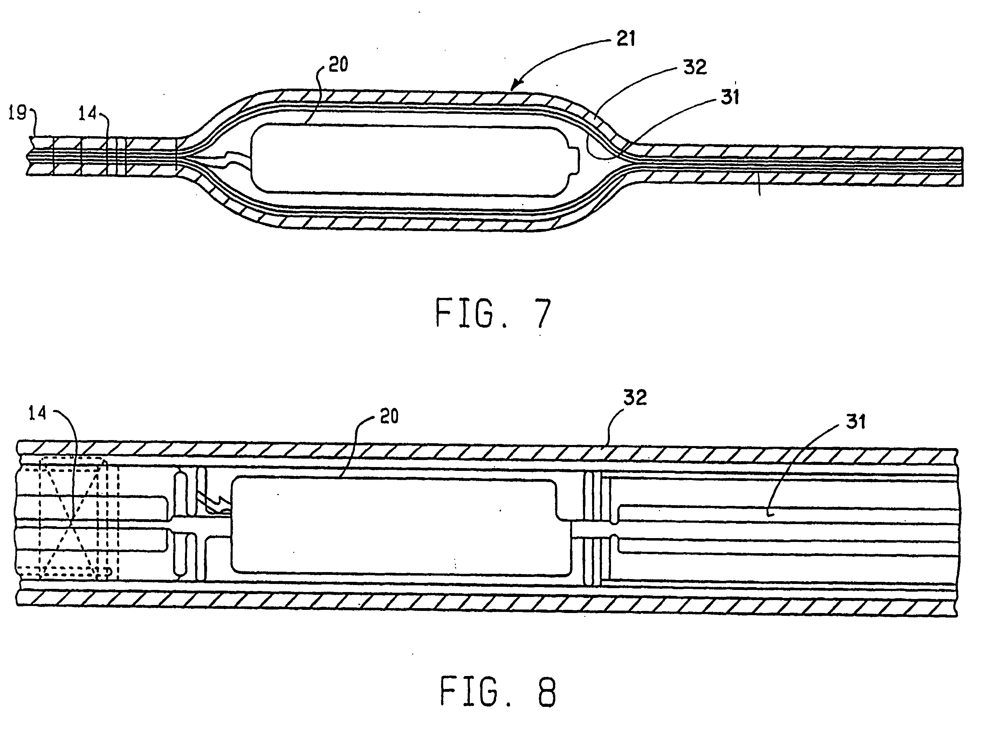

Fig. 7 illustrates the location of inflator 20 within torso section 21 prior to inflation and Fig. 8 shows the torso section 21 inflated within the restraints of the inner walls 18w of enclosure 18.

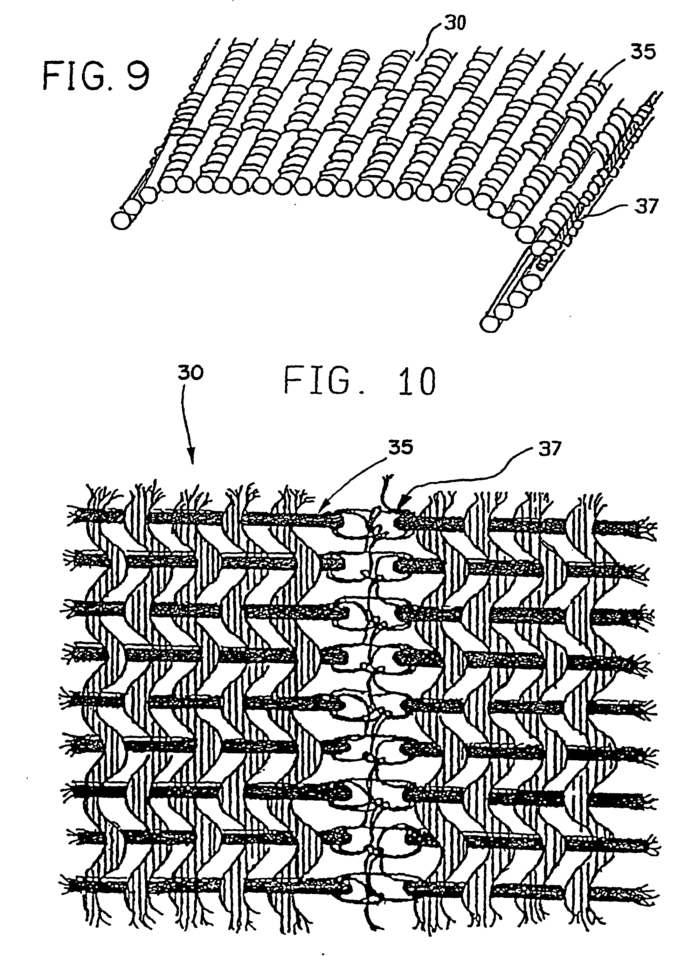

Fig. 9 shows a woven fabric portion 30 of tubular belt section 32 with longitudinal fiber or thread 37 which fails due to tension in cross or fill fibers 35. Fig. 10 in an enlarged view illustrating fabric portion 30. Inflation causes cross fill fibers 35 to pull on frangible thread 37 to cause it to rupture creating longitudinal opening 36.

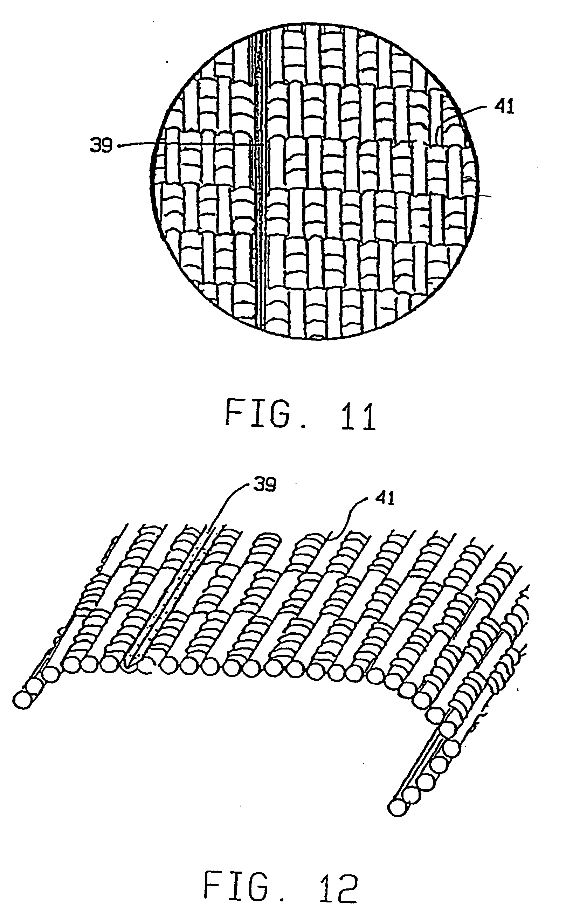

In Figs. 11 and 12 an alternative arrangement for providing pressure induced rupture of the tubular webbing component 32 is shown in which fiber 39 is preweakened by chemical etch or laser light. Of course, fibers can be weakened by reduction of fiber cross-section. Alternatively, the webbing may be weakened by a hot knife or wire or by water jet. Seam 39 is broken by the pulling of fill fibers 41.

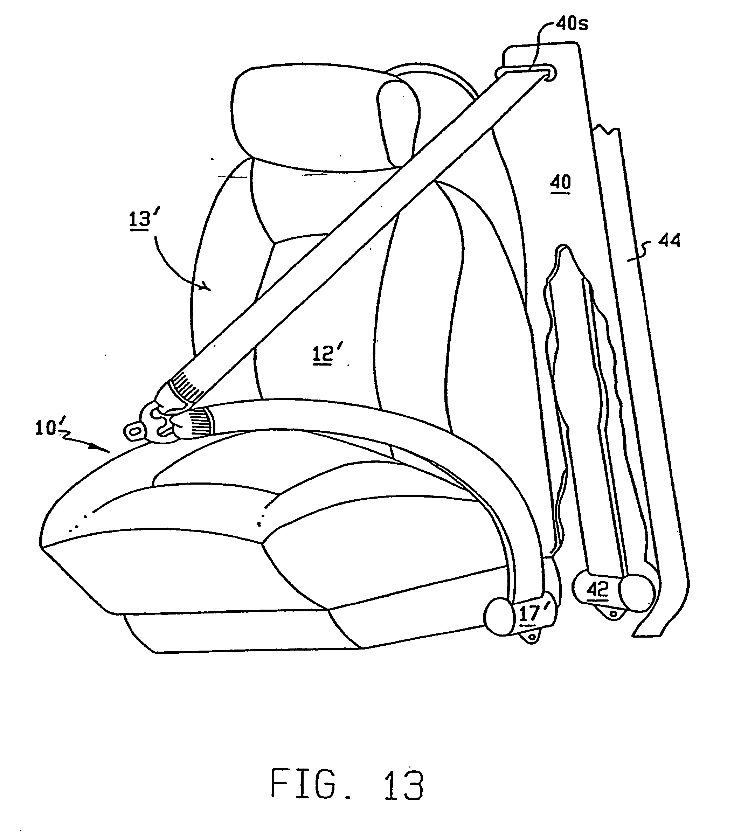

Turning to Fig. 13, an alternative embodiment is shown in which belt 13' passes into a belt enclosure 40 positioned adjacent seat 10'. Enclosure 40 is attached to vehicle frame pillar 44. Enclosure 40 includes an upper slot opening 40s and a belt take-up anchor 42. Also shown are seat 10', seat back 12' and side take-up reel 17'.

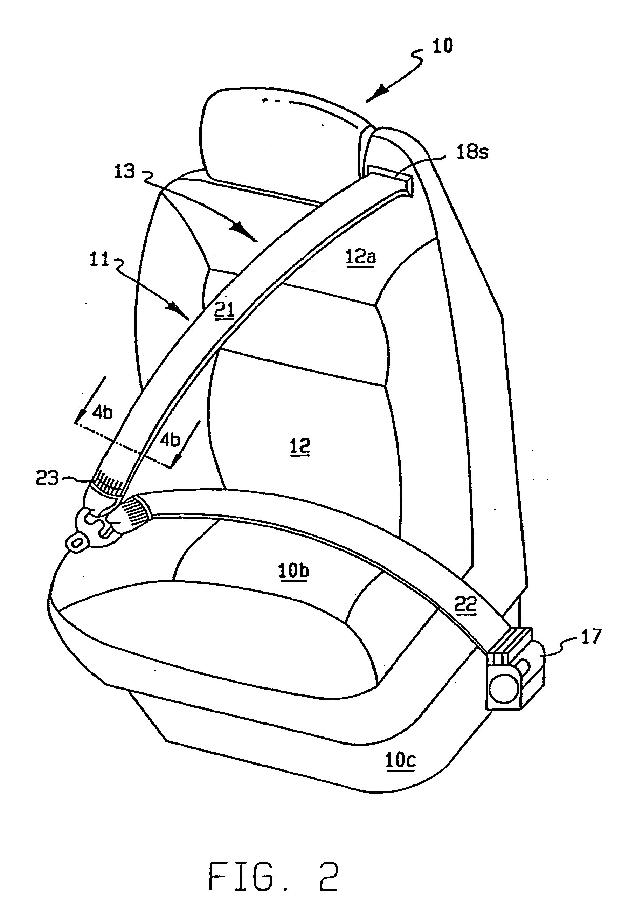

In operation of restraint belt 13 including its torso section 21, an occupant sits in seat 10 and he or she pulls tongue connector 25 having tongue 25b over his or her lap and inserts tongue 25b in lap right side buckle receiver 9 (Fig. 1). As this buckling up step is carried out, torso belt section 21 including its hidden rear web portion 19 pays out of retractor anchor 16. At the same time lap belt section 22 pays out of anchor 17. The amount of belt pay out depends on the occupant, with more belt being payed out for a larger occupant than a smaller occupant. Inflatable torso section 21 which pays off anchor 16 exits guide enclosure slot 18s, in upper seat back 12a (Fig. 2). Belt system 13 is designed so that inflator 20 and a length of attached belt 19 remain in the belt guide enclosure 18, even when the largest occupant is being accommodated.

In further operation of the system during a crash event when the vehicle experiences rapid deceleration, a crash sensor (not shown) activates inflator 20 which discharges gases into inner belt component 31. Anchors 16, 17 lock up preventing any additional belt pay out. Since inflator 20 is located in enclosure 18 behind seat 10 or adjacent the seat in enclosure 40, the gases first discharged from inflator 20 expand inner component 31 to the extent it can expand within the confines of enclosure 18. Since enclosure 18 restrains belt section expansion, inner section 31 does not emerge from outer belt section 32 even if section 32 develops a frangible split due to internal gas pressures.

Once belt section 21 in enclosure 18 has been inflated to the extent permissible, further discharged gases serve to inflate the torso belt section 21 outside enclosure 18 and adjacent the occupant's torso. When pressure in the torso belt 21 outside enclosure 18 reaches a certain level, frangible fibers in outer belt component 32 break causing component 32 to rupture at a point and then rapidly along the longitudinal length of the belt component 32 between slots 18s and stitching 23 (Fig. 5) creating rupture opening 36. Fiber 37 varies in strength along its length with its weaker portion being at the lower torso end adjacent stitching 23 remote from the area of occupant's head and slot 18s. Such variation in fiber strength causes emergence of the inner belt component 31 at the area just above stitching 23 prior to its emergence at the area adjacent the occupant's head.

During vehicle deceleration and phases of inflation of torso section 21 the system 11 functions to decelerate the occupant as follows:
1. Outer belt component 32 being in engagement with the occupant's torso resists occupant's forward motion. The area (width times length) of outer belt 32 (which is initially loaded by occupant's movement) is an area equal to or substantially equal to the area of the outer belt 32 prior to any inflation. Such area in contact with the torso is in the range of 322.58 - 438.71 cm² (50 to 68 in²).
2. Upon the onset of inflation of the inner torso component 31 and the rupture of outer belt component 32, outer component 32 is reduced in strength due to the rupture-created slot 36 (Figs. 5 and 6). As the occupant is decelerated component 32 elongates and narrows.
3. As outer belt component 32 elongates and narrows, inner inflated component 31 is expanding laterally as it is inflated causing it to shorten. Further component 31 as it shortens is subjected to the load exerted by the occupant which load becomes greater than the load on the outer section.
4. By the time inner belt section 31 is fully inflated and occupant deceleration is reaching a point where a maximum load is being placed on belt system 11, the inner component 31 serves as the principal occupant restraint. Inner belt component 31, also made of fabric or similar material, stretches as it is loaded providing in its inflated state, a cushioning effect against occupant's torso.. Upon full inflation, the area of belt contact with the torso is in the range of 967.44 - 1161.29 cm² (150-180 in²) depending on the width of tubular webbing 31 and the size of the occupant (e.g. assumes a minimum of 1/3 contact circumference of tube as shown in Fig. 6c)

Both outer belt component 32 and inner belt component 31 are constructed so that neither breaks or fails when loaded during operation of the belt system of the present invention. The belt components stretch or elongate when loaded but do not fail except at extreme loads.

Advantages to the two component torso belt of the present invention are to eliminate the decorative cover (i.e., the tubular webbing acts as a load bearing member as well as the outer cover). By reducing the load to the inflatable member lighter weight (≤ 203.4 g/m² (6.0 oz/yd²)), low denier ≤210 denier), and low thickness 0.0229 cm (≤0.009") fabrics may be used for the inflatable member. Also, the tubular webbing acts as reinforcement for the sewn connection of the inflatable member to the tubular webbing. Because the yarns used in the manufacture of the tubular webbing are larger (500 to 1300 denier) than that of the inflatable fabric the tubular webbing resists the tearing load action to the sewn connection induced by the pressure created by the inflator as it fills the inflatable member.

The tubular outer belt component 32 and the inner inflatable component 31 may be designed to have relative resistance to further elongation as loaded so that the percent tensile loading on the tubular belt component 32 has a selected range with a medium and the percent tensile loading on the inner component has a selected range with the media of such ranges adding up to about one hundred at various phases of loading from initial deceleration to maximum loading.

Since both belt components 31, 32 serve to carry the loads imposed during deceleration each component can be made thinner, lighter and of less strong material than a conventional belt. Inflation rates and amounts and extent of inflation may be varied by varying the size, thickness and strength of the inner and outer components and by selecting inflators of varying type, size and output. While it is preferred that outer component 32 carry the initial load prior to its rupture caused by inflation of the inner section other load sharing between such components may be provided. Upon inflation and rupture, it is preferred that inner component 31 takes more and more of the load as the crash event continues. Upon the maximum load being applied during the crash, it is intended that inflated inner component 31 carry over half such load and up to ninety (90%) per cent of the such load.

When belt 13 is in normal use with occupant buckled up, the torso section 21 of belt 13 visible to occupant has the appearance of convention vehicle restraint belting.

Outer tubular belt component 32 preferably has the physical properties of (1) tensile strength of 13.34 - 29.80 kN (3,000-6,700 lbs.) (2) elongation of 7-10% at 11.12 kN (2,500 lbs.) and thickness of 0.0635 - 0.1524 cm (0.025-0.060 inches) similar to conventional belt webbing. However, any suitable material can be used provided it can withstand the initial loads until inner component 31 takes up the load burden upon inflation and provided it is readily scorable, or can otherwise be weakened to accomplish proper rupture during inflation. Outer tubular belt component 32 comprises a low denier (50 to 420) woven frangible warp fiber. Fill fibers positioned at approximately right angles to the warp fiber cause the frangible fiber to fail when inflation occurs by pulling on the fiber until it fails.

The outer tubular webbing ranges in thickness from 0.0889 - 0.1397cm (0.035" to 0.055") and ranges in width from 4.763 - 6.350 cm (1.875" to 2.5"). The tubular webbing is an uncoated woven polyester hollow webbing. Polyester was chosen for its low elongation and flammability properties.

The elongation of the outer tubular component 32, alone under a 11.12 kN (2,500 lbs) load is 7% to 10% depending on its thickness and width (*i*.*e*., cross-sectional area). Under the same load of 11.12 kN (2,500 lbs) the uninflated pleated inflatable inner member (no tubular webbing surrounding it) elongates in the ranges of 15.4% to 23,1%. The elongation of the uninflated composite of tubular webbing and pleated inflatable is 7.8% to 8.7%.

The band assembly including outer and inner members were fixed at one end, inflated to the pressures noted below while loaded in tension using a low strain rate tensile test machine. The data is set out in Table 1.

**Table 1**

| Load kN (Lbs) | Band kPa (psig) | % Elong. Inflatable | % Elong. Split Web |
|---|---|---|---|
| 4.448 (1,000) | 75.84 (11.0) | 10.76 | 4.6. |
| 6.672 (1,500) | 82.74 (12.0) | 13.8 | 4.6 |
| 8.896 (2,000) | 82.74 (12.0) | 13.8 | 7.7 |
| 11.12 (2,500) | 86.18 (12.5) | 16.92 | 9.2 |
| 20.84 (4,685) | 82.74 (12.0) | (Failure) | |

Based on the above data and using elastic modulus to equivocate the relationship between the composite band and its individual components 31,32 it has been determined that load distribution in the uninflated state is 4 (inflatable) to 1 (webbing). Using the same principle, the load distribution in the inflated state between the individual components 31,32 is 3 (inflatable) to 1 (split webbing). This change in load distribution results in a 5% to 7% reduction in the longitudinal load transferred to the inflatable. The change in the load distribution is due to some of the load being dispersed radially through the inflated inflatable member.

The inner inflatable component 31 is preferably constructed of a 210 denier or less nylon or polyester woven fabric coated for air retention purposes with either thermal plastic polyurethane (for ease of heat sealing) or silicone coating. The fabrics currently in use possess the following physical characteristics:

| Weave Pattern | Plain, 2:1 Twill or Oxford or Basket |
|---|---|
| Weight (g/m²) (oz./yd²) | 152.6 - 203.4 (4.5 - 6.0) |
| Thickness cm (inches) | 0.0178 - 0.0228 0.007 - 0.009 |
| Tensile Strength N (lb) | 978.6 - 1,245.5 220 - 280 (Hoop Direction) |
| | 1,223.3 - 1,445.7 275 - 325 (Longitudinal Direction) |

The diameter of the inflatable member at 68.95 kPa (10 psig) is about 15.24cm (6 inches).

The expansion of inner component 31 causes the outer component 32 positioned in belt enclosure 18 to engage the inner surface of enclosures 18, 40 over a distance between inflator 20 and the enclosure exit slots 18s, 40s of enclosures 18s and 40. This engagement caused by inflation pressure and friction assists in transferring the load to structural seat 10, 10'.

Outer belt component 32 remains in contact with the occupant during operation with the inner component deploying away from and substantially out of contact with the occupant. Outer belt 32 provides an insulation layer between the hot gases in the inner component and the occupant.

Finally, the dual component belt of the present invention may be utilized in the lap belt section or in both the torso and lap belt sections. A second inflator may be positioned to serve the lap belt section but is not necessary if a run-through buckle tongue is employed.

## Claims

1. A belt restraint system for use in a vehicle having a seat (10) for an occupant having a torso wherein the belt restraint system comprises:
a belt member enclosure (18;40) to be mounted adjacent to or behind the vehicle seat (10);
a belt-member (13) for restraining said occupant during vehicle deceleration which belt member (13) is loaded by forces required to decelerate said occupant, wherein a portion of said belt member (13) is located within said belt member enclosure (18;40);
said belt member (13) including an outer belt component (32) and an inner inflatable belt component (31), which components (31,32) are connected to one another at spaced apart locations;
a portion of the outer belt component (32) being frangible to create an opening (36) when such portion is stressed; and
an inflator (20) in communication with the inner inflatable component (31) for inflating such component, wherein the inflator (20) is within the belt member enclosure (18;40);
whereby when the inflator (20) at least partially inflates the inner inflatable component (31), the belt components (31,32) share the load of the belt member (13) during a deceleration period, and whereby the outer component (32) ruptures due to inflation stress creating an opening (36) allowing the inner inflatable component (31) to exit such opening (36) to provide an inflatable belt section for occupant restraint.

2. The belt restraint system of claim 1 in which the belt member is a torso restraining member (21).

3. The belt restraint system of claim 1 in which the belt member is a lap belt (22).

4. The belt restraint system of claim 1, wherein said belt member (13) includes an inflatable torso section (21) anchored between a first anchor (9) adjacent the seat (10) and a second anchor (16;42) behind the seated occupant, wherein said inflatable torso section (21) comprises said outer belt component (32) and said inner inflatable belt component (31) and is in communication with the inflator (20), and wherein a portion of the outer belt component (32) is frangible to create an opening (36) when the portion is stressed from which opening the inner inflatable belt component (31) emerges to provide an inflated torso belt section.

5. The belt restraint system of claim 4 in which the belt member includes a lap belt (22).

6. The belt restraint system of claim 4 in which the belt guide enclosure (18) is provided between the occupant and the second anchor (16).

7. The belt restraint system of claim 6 in which the inflator (20) is positioned within the torso section (21) located in the enclosure (18).

8. The belt restraint system of claim 4 in which outer belt component (32) comprises a woven fabric (30) with a plurality of longitudinal warp threads and in which the frangible portion is one warp thread (37;39) that is weaker than the other warp threads.

9. The belt restraint system of claim 4 further comprising the seat (10) which has a frame structure (24) and wherein the enclosure (18) is secured to such structure (24).

10. The belt restraint system of claim 6 in which the seat (10) has an upper back (12) and the guide enclosure (18) has one end adjacent the upper back (12) and another end adjacent the second anchor (16).

11. The belt restraint system of claim 8 in which the weaker thread (37;39) extends from a slot (18s) to the area adjacent the tongue connector (25) and is weaker at the end adjacent the tongue connector (25) than at the end adjacent the slot (18s).

12. The belt restraint system of claim 6 in which the vehicle has a frame (44) and the enclosure (40) is suitable to be secured to such frame (44).

13. The belt restraint system of claim 1 in which deceleration extends over a period of time including a first phase during which the inflator (20) supplies gases to the inner component (31), a next phase during which the outer component (32) ruptures and the inner component (31) exits at least partially through the rupture, and a final phase in which the inner component (31) is fully inflated, wherein the load on the outer belt component (32) is reduced from said first phase to said final phase.

14. The belt restraint system of claim 13 in which the inner belt component (31) assumes more load than the outer component (32) during the final phase.

15. The belt restraint system of claim 1, wherein the frangible portion the outer belt component (32) is preweakened by chemical etching or laser lighting.

16. The belt restraint system of claim 1, wherein the frangible portion has a denier of 50 to 420.

17. The belt restraint system of claim 1, wherein the inner inflatable belt component (31) is formed of nylon or polyester woven fabric having denier of 210 or less.

18. A method of restraining an occupant seated in a vehicle comprising:
1) providing a tubular belt member (32) anchored upon deceleration of the vehicle at two anchor locations with the first anchor (9) adjacent the seat (10) and another anchor (16;42) at a remote location in the vehicle which tubular belt member (13) is loaded by forces required to decelerate said occupant;
2) providing a belt member enclosure (18;40) between the occupant and said remote anchor (16;42) location adjacent to or behind the vehicle seat (10), wherein a portion of said tubular belt member (32) is located within the belt member enclosure (18;40); and
3) locating in the tubular belt member (32) an inner inflatable member (31), said inner inflatable member (31) having two ends and a middle portion with the middle portion extending across the occupant and the ends secured to such tubular belt member (32);
4) providing as a part of the tubular belt member (32) a rupturable portion which upon inflation of the inflatable inner member (31) ruptures to permit such inner member (32) to exit the tubular belt member (32);
5) providing an inflator (20), whereby when the inflator (20) at least partially inflates the inner inflatable member (31), the inner inflatable member (31) and rupturable portion share the load of the tubular belt member during a deceleration period; and
6) locating said inflator (20) within the belt member enclosure and in communication with the inner inflatable member (31) so that upon deceleration of the vehicle, the inflator (20) inflates the inner inflatable member (31) which causes it to exit the tubular belt and to assist in decelerating the occupant.

19. The method of restraining an occupant of claim 18 in which the inner inflatable member (31) extends across the occupant's torso.

20. The method of restraining an occupant of claim 18 in which the inner inflatable member (31) extends across the occupant's lap.

21. The method of restraining an occupant of claim 18 including the step of providing the belt enclosure (18) between the occupant and the remote anchor (16) which belt member (13) reciprocates in such enclosure (18).

22. The method of restraining an occupant of claim 18 in which the inflator (20) is located in the inner inflatable member (31).

23. The method of restraining an occupant of claim 18 in which the tubular outer belt member (32) and the inner inflatable belt member (31) share the load caused by the decelerating occupant with the outer belt member (32) carrying a lesser load during its rupture during deceleration and the inner member (31) carrying a greater load after its complete inflation.

24. The method of claim 18 in which the outer tubular belt member (32) and the inner inflatable member (31) have relative resistance to further elongation as loaded so that the percent tensile loading by the outer tubular belt (32) and the percent tensile loading of the inner member (31) add up to one hundred at various phases of loading from initial deceleration to maximum loading.

25. The method of claim 18 in which the outer tubular belt member (32) and the inner member (31) have relative resistance to further elongation as loaded by deceleration of occupant with the resistance of the outer belt member (32) being lessened upon its rupture.

26. The method of claim 18 in which the tubular belt member (32) includes fabric and the rupturable portion is a fiber (37;39) in such fabric.

27. The method of claim 18 in which the share of the load of the outer belt component (32) is reduced in the first phase and in which the inner component (31) withstands 60%-90% of the load in the final phase.

28. The method of claim 18 in which the period of deceleration comprises:
a first phase during which the inflator (20) supplies gases to the inner inflatable member (31);
a next phase during which the rupturable portion ruptures and the inner inflatable member (31) exits at least partially through the rupture, and
a final phase in which the inner inflatable member (31) is fully inflated, wherein the load on the outer member (32) is reduced from said first phase to said final phase.

## Patentansprüche

1. Gurtrückhaltesystem für eine Verwendung in einem Fahrzeug mit einem Sitz (10) für einen Insassen, der einen Torso aufweist, wobei das Gurtrückhaltesystem aufweist:
ein Gurtelementgehäuse (18; 40), das angrenzend an den oder hinter dem Fahrzeugsitz (10) montiert ist;
ein Gurtelement (13) für das Zurückhalten des Insassen während der Abbremsung des Fahrzeuges, wobei das Gurtelement (13) durch Kräfte belastet wird, die erforderlich sind, um den Insassen abzubremsen, worin ein Abschnitt des Gurtelementes (13) innerhalb des Gurtelementgehäuses (18; 40) angeordnet ist;
wobei das Gurtelement (13) eine äußere Gurtkomponente (32) und eine innere aufblasbare Gurtkomponente (31) umfaßt, wobei die Komponenten (31, 32) miteinander an beabstandeten Stellen verbunden sind;
wobei ein Abschnitt der äußeren Gurtkomponente (32) zerbrechlich ist, um eine Öffnung (36) zu bilden, wenn ein derartiger Abschnitt beansprucht wird; und
eine Luftpumpe (20) in Verbindung mit der inneren aufblasbaren Komponente (31) für das Aufblasen einer derartigen Komponente, worin sich die Luftpumpe (20) innerhalb des Gurtelementgehäuses (18; 40) befindet;
wobei, wenn die Luftpumpe (20) mindestens teilweise die innere aufblasbare Komponente (31) aufbläst, sich die Gurtkomponenten (31, 32) die Belastung des Gurtelementes (13) während einer Periode des Abbremsens teilen, und wobei die äußere Komponente (32) infolge der Aufblasbeanspruchung reißt, wodurch eine Öffnung (36) gebildet wird, die gestattet, daß die innere aufblasbare Komponente (31) aus einer derartigen Öffnung (36) austritt, um einen aufblasbaren Gurtabschnitt für das Zurückhalten des Insassen bereitzustellen.

2. Gurtrückhaltesystem nach Anspruch 1, bei dem das Gurtelement ein Torsorückhalteelement (21) ist.

3. Gurtrückhaltesystem nach Anspruch 1, bei dem das Gurtelement ein Beckengurt (22) ist.

4. Gurtrückhaltesystem nach Anspruch 1, bei dem das Gurtelement (13) einen aufblasbaren Torsoabschnitt (21) umfaßt, der zwischen einem ersten Anker (9) angrenzend an den Sitz (10) und einem zweiten Anker (16; 42) hinter dem sitzenden Insassen verankert ist, worin der aufblasbare Torsoabschnitt (21) die äußere Gurtkomponente (32) und die innere aufblasbare Gurtkomponente (31) aufweist und mit der Luftpumpe (20) in Verbindung ist, und worin ein Abschnitt der äußeren Gurtkomponente (32) zerbrechlich ist, um eine Öffnung (36) zu bilden, wenn der Abschnitt beansprucht wird, wobei aus der Öffnung die innere aufblasbare Gurtkomponente (31) austritt, um einen aufgeblasenen Torsogurtabschnitt zu liefern.

5. Gurtrückhaltesystem nach Anspruch 4, bei dem das Gurtelement einen Beckengurt (22) umfaßt.

6. Gurtrückhaltesystem nach Anspruch 4, bei dem das Gurtführungsgehäuse (18) zwischen dem Insassen und dem zweiten Anker (16) vorhanden ist.

7. Gurtrückhaltesystem nach Anspruch 6, bei dem die Luftpumpe (20) innerhalb des Torsoabschnittes (21) positioniert ist, der im Gehäuse (18) angeordnet ist.

8. Gurtrückhaltesystem nach Anspruch 4, bei dem die äußere Gurtkomponente (32) ein Gewebe (30) mit einer Vielzahl von sich in Längsrichtung erstreckenden Kettfäden aufweist, und bei dem der zerbrechliche Abschnitt ein Kettfaden (37; 39) ist, der schwächer ist als die anderen Kettfäden.

9. Gurtrückhaltesystem nach Anspruch 4, das außerdem den Sitz (10) aufweist, der eine Rahmenkonstruktion (24) aufweist, und bei dem das Gehäuse (18) an einer derartigen Konstruktion (24) gesichert ist.

10. Gurtrückhaltesystem nach Anspruch 6, bei dem der Sitz (10) eine obere Rücklehne (12) aufweist und das Führungsgehäuse (18) ein Ende angrenzend an die obere Rücklehne (12) und ein anderes Ende angrenzend an den zweiten Anker (16) aufweist.

11. Gurtrückhaltesystem nach Anspruch 8, bei dem sich der schwächere Faden (37; 39) von einem Schlitz (18s) zum Bereich angrenzend an den Zungenverbinder (25) erstreckt und an dem Ende schwächer ist, das an den Zungenverbinder (25) angrenzt, als an dem Ende, das an den Schlitz (18s) angrenzt.

12. Gurtrückhaltesystem nach Anspruch 6, bei dem das Fahrzeug einen Rahmen (44) aufweist und das Gehäuse (40) so geeignet ist, daß es an einem derartigen Rahmen (44) gesichert wird.

13. Gurtrückhaltesystem nach Anspruch 1, bei dem sich die Abbremsung über eine Zeitdauer erstreckt, die umfaßt: eine erste Phase, während der die Luftpumpe (20) der inneren Komponente (31) Gase zuführt; eine nächste Phase, während der die äußere Komponente (32) reißt und die innere Komponente (31) mindestens teilweise durch den Bruch austritt; und eine letzte Phase, in der die innere Komponente (31) vollständig aufgeblasen wird, worin die Belastung auf die äußere Gurtkomponente (32) von der ersten Phase bis zur letzten Phase verringert wird.

14. Gurtrückhaltesystem nach Anspruch 13, bei dem die innere Gurtkomponente (31) während der letzten Phase mehr Belastung übernimmt als die äußere Komponente (32).

15. Gurtrückhaltesystem nach Anspruch 1, bei dem der zerbrechliche Abschnitt der äußeren Gurtkomponente (32) durch ein chemisches Ätzen oder ein Laserlicht vorher geschwächt wird.

16. Gurtrückhaltesystem nach Anspruch 1, bei dem der zerbrechliche Abschnitt einen Denier von 50 bis 420 aufweist.

17. Gurtrückhaltesystem nach Anspruch 1, bei dem die innere aufblasbare Gurtkomponente (31) aus Nylon- oder Polyestergewebe mit einem Denier von 210 oder weniger gebildet wird.

18. Verfahren für das Zurückhalten eines Insassen, der in einem Fahrzeug sitzt, das aufweist:
1) Bereitstellen eines schlauchförmigen Gurtelementes (32), das bei der Abbremsung des Fahrzeuges an zwei Ankerstellen verankert wird, mit dem ersten Anker (9) angrenzend am Sitz (10) und einem weiteren Anker (16; 42) an einer entfernten Stelle im Fahrzeug, wobei das schlauchförmige Gurtelement (13) durch Kräfte belastet wird, die erforderlich sind, um den Insassen abzubremsen;
2) Bereitstellen eines Gurtelementgehäuses (18; 40) zwischen dem Insassen und der entfernten Ankerstelle (16; 42), angrenzend an oder hinter dem Fahrzeugsitz (10), worin ein Abschnitt des schlauchförmigen Gurtelementes (32) innerhalb des Gurtelementgehäuses (18; 40) angeordnet ist;
3) Anordnen eines inneren aufblasbaren Elementes (31) im schlauchförmigen Gurtelement (32), wobei das innere aufblasbare Element (31) zwei Enden und einen mittleren Abschnitt aufweist, wobei sich der mittlere Abschnitt über den Insassen erstreckt und die Enden an einem derartigen schlauchförmigen Gurtelement (32) gesichert sind;
4) Bereitstellen eines zerreißbaren Abschnittes als ein Teil des schlauchförmigen Gurtelementes (32), das beim Aufblasen des aufblasbaren inneren Elementes (31) reißt, um zu gestatten, daß ein derartiges inneres Element (32) aus dem schlauchförmigen Gurtelement (32) austritt;
5) Bereitstellen einer Luftpumpe (20), wodurch sich, wenn die Luftpumpe (20) mindestens teilweise das innere aufblasbare Element (31) aufbläst, das innere aufblasbare Element (31) und der zerreißbare Abschnitt die Belastung des schlauchförmigen Gurtelementes während der Periode des Abbremsens teilen; und
6) Anordnen der Luftpumpe (20) innerhalb des Gurtelementgehäuses und in Verbindung mit dem inneren aufblasbaren Element (31), so daß bei der Abbremsung des Fahrzeuges die Luftpumpe (20) das innere aufblasbare Element (31) aufbläst, was bewirkt, daß es aus dem schlauchförmigen Gurt austritt und das Abbremsen des Insassen unterstützt.

19. Verfahren für das Zurückhalten eines Insassen nach Anspruch 18, bei dem sich das innere aufblasbare Element (31) über den Torso des Insassen erstreckt.

20. Verfahren für das Zurückhalten eines Insassen nach Anspruch 18, bei dem sich das innere aufblasbare Element (31) über das Becken des Insassen erstreckt.

21. Verfahren für das Zurückhalten eines Insassen nach Anspruch 18, das den Schritt des Bereitstellens des Gurtgehäuses (18) zwischen dem Insassen und dem entfernten Anker (16) umfaßt, wobei sich das Gurtelement (13) in einem derartigen Gehäuse (18) hin- und herbewegt.

22. Verfahren für das Zurückhalten eines Insassen nach Anspruch 18, bei dem die Luftpumpe (20) im inneren aufblasbaren Element (31) angeordnet ist.

23. Verfahren für das Zurückhalten eines Insassen nach Anspruch 18, bei dem sich das schlauchförmige äußere Gurtelement (32) und das innere aufblasbare Gurtelement (31) die Belastung teilen, die durch das Abbremsen des Insassen hervorgerufen wird, wobei das äußere Gurtelement (32) eine geringere Belastung während seines Zerreißens während der Abbremsung und das innere Element (31) eine größere Belastung nach seinem vollständigen Aufblasen aufnimmt.

24. Verfahren nach Anspruch 18, bei dem das äußere schlauchförmige Gurtelement (32) und das innere aufblasbare Element (31) einen relativen Widerstand gegen eine weitere Dehnung im Belastungszustand aufweisen, so daß sich die prozentuale Zugbelastung durch den äußeren schlauchförmigen Gurt (32) und die prozentuale Zugbelastung des inneren Elementes (31) zu einem Hundert in den verschiedenen Phasen der Belastung von der anfänglichen Abbremsung bis zur maximalen Belastung addieren.

25. Verfahren nach Anspruch 18, bei dem das äußere schlauchförmige Gurtelement (32) und das innere Element (31) einen relativen Widerstand gegen eine weitere Dehnung im Belastungszustand durch die Abbremsung des Insassen aufweisen, wobei der Widerstand des äußeren Gurtelementes (32) bei seinem Zerreißen verringert wird.

26. Verfahren nach Anspruch 18, bei dem das schlauchförmige Gurtelement (32) einen Stoff umfaßt und der zerreißbare Abschnitt eine Faser (37; 39) in einem derartigen Stoff ist.

27. Verfahren nach Anspruch 18, bei dem der Anteil der Belastung der äußeren Gurtkomponente (32) in der ersten Phase verringert wird, und bei dem die innere Komponente (31) 60 % bis 90 % der Belastung in der letzten Phase aushält.

28. Verfahren nach Anspruch 18, bei dem die Periode der Abbremsung aufweist:
eine erste Phase, während der die Luftpumpe (20) dem inneren aufblasbaren Element (31) Gase zuführt;
eine nächste Phase, während der der zerreißbare Abschnitt reißt und das innere aufblasbare Element (31) mindestens teilweise durch den Bruch austritt; und
eine letzte Phase, in der das innere aufblasbare Element (31) vollständig aufgeblasen wird, wobei die Belastung am äußeren Element (32) von der ersten Phase bis zur letzten Phase verringert wird.

## Revendications

1. Système de retenue à ceinture destine à être utilisé dans un véhicule comportant un siège (10) pour un occupant comportant un torse, le système de retenue à ceinture comprenant:
une enceinte de l'élément de ceinture (18, 40), destinée à être monté près du siège du véhicule (19) ou derrière celui-ci;
un élément de ceinture (13) destiné à retenir ledit occupant au cours d'une décélération du véhicule, cet élément de ceinture (13) étant chargé par les forces requises pour décélérer ledit occupant, une partie dudit élément de ceinture (13) étant agencé dans ladite enceinte de l'élément de ceinture (18, 40);
ledit élément de ceinture (13) englobant un composant de ceinture externe (32) et un composant de ceinture interne gonflable (31), ces composants (31, 32) étant connectés l'un à l'autre au niveau d'emplacements espacés;
une partie du composant de ceinture externe (32) étant frangible, pour former une ouverture (36) lors de l'exposition de cette partie à une contrainte; et
un dispositif de gonflement (20) en communication avec le composant interne gonflable (31), pour gonfler ce composant, le dispositif de gonflement (20) étant agencé à l'intérieur de l'enceinte de l'élément de ceinture (18, 40);
les composants de la ceinture (31, 32) partageant la charge de l'élément de ceinture (13) lors d'une période de décélération, lorsque le dispositif de gonflement (20) gonfle au moins partiellement le composant interne gonflable (31), et le composant externe (32) étant soumis à une rupture par suite de la contrainte de gonflement, formant une ouverture (36) permettant la sortie du composant interne gonflable (31) à travers cette ouverture (36) pour établir une section de ceinture gonflable pour retenir l'occupant.

2. Système de retenue à ceinture selon la revendication 1, dans lequel l'élément de ceinture est un élément de retenue du torse (21).

3. Système de retenue à ceinture selon la revendication 1, dans lequel l'élément de ceinture est une ceinture abdominale (22).

4. Système de retenue à ceinture selon la revendication 1, dans lequel ledit élément de ceinture (18) englobe une section de torse gonflable (21) ancrée entre un premier point d'ancrage (19) adjacent au siège (10) et un deuxième point d'ancrage (16; 42) agencé derrière l'occupant assis, ladite section de torse gonflable (21) comprenant ledit composant de ceinture externe (32) et ledit composant de ceinture interne gonflable (31) et étant en communication avec le dispositif de gonflement (20), une partie du composant de ceinture externe (32) étant frangible pour produire une ouverture (36) lorsque la partie est soumise à une contrainte, le composant de ceinture interne gonflable (31) émergeant de cette ouverture pour établir une section de ceinture de torse gonflée.

5. Système de retenue à ceinture selon la revendication 4, dans lequel l'élément de ceinture englobe une ceinture abdominale (22).

6. Système de retenue à ceinture selon la revendication 4, dans lequel l'enceinte de guidage de la ceinture (18) est agencée entre l'occupant et le deuxième point d'ancrage (16).

7. Système de retenue à ceinture selon la revendication 6, dans lequel le dispositif de gonflement (20) est positionnée dans la section de torse (21) agencée dans l'enceinte (18).

8. Système de retenue à ceinture selon la revendication 4, dans lequel le composant de ceinture externe (32) comprend un tissu tissé (30) comportant plusieurs fils de chaîne longitudinaux, la partie frangible étant constituée par un fil de chaîne (37; 39) plus faible que les autres fils de chaîne.

9. Système de retenue à ceinture selon la revendication 4, comprenant en outre le siège (10) comportant une structure de cadre (24), l'enceinte (18) étant fixée sur cette structure (24).

10. Système de retenue à ceinture selon la revendication 6, dans lequel le siège (10) comporte un dossier supérieur (12), l'enceinte de guidage (18) comportant une extrémité adjacente au dossier supérieur (12) et une autre extrémité adjacente au deuxième point d'ancrage (16).

11. Système de retenue à ceinture selon la revendication 8, dans lequel le fil plus faible (37; 39) s'étend à partir d'une fente (18s) vers la zone adjacente au connecteur de la languette (25) et est plus faible au niveau de l'extrémité adjacente au connecteur de la languette (25) qu'au niveau de l'extrémité adjacente à la fente (18s).

12. Système de retenue à ceinture selon la revendication 6, dans lequel le véhicule comporte un cadre (44), l'enceinte (40) étant destinée à être fixer sur ce cadre (44).

13. Système de retenue à ceinture selon la revendication 1, dans lequel la décélération s'étend sur une période de temps englobant une première phase, au cours de laquelle le dispositif de gonflement (20) fournit des gaz au composant interne (31), une phase suivante, au cours de laquelle le composant externe (22) est soumis à une rupture, le composant interne (31) sortant au moins partiellement à travers la rupture, et une phase finale au cours de laquelle le composant interne (31) est entièrement gonflé, la charge appliquée au composant de ceinture externe (32) étant réduite de ladite première phase vers ladite phase finale.

14. Système de retenue à ceinture selon la revendication 13, dans lequel le composant de ceinture interne (31) absorbe une charge supérieure à celle absorbée par le composant externe (32) au cours de la phase finale.

15. Système de retenue à ceinture selon la revendication 1, dans lequel la partie frangible du composant de ceinture externe (32) est affaiblie d'avance par décapage chimique ou par application de lumière laser.

16. Système de retenue à ceinture selon la revendication 1, dans lequel la partie frangible a un denier compris entre 50 et 420.

17. Système de retenue à ceinture selon la revendication 1, dans lequel le composant de ceinture interne gonflable (31) est composé d'un tissu tissé de nylon ou de polyester ayant un denier de 210 ou moins.

18. Procédé de retenue d'un occupant assis dans un véhicule, comprenant les étapes ci-dessous:
1) fourniture d'un élément de ceinture tubulaire (32) ancré lors de la décélération du véhicule au niveau de deux points d'ancrage, le premier point d'ancrage (9) étant adjacent au siège (10) et un autre point d'ancrage (16; 42) étant agencé au niveau d'un emplacement éloigné dans le véhicule, l'élément de ceinture tubulaire (13) étant chargé par les forces nécessaires pour décélérer ledit occupant;
2) fourniture d'une enceinte de l'élément de ceinture (18; 40) entre l'occupant et ledit point d'ancrage éloigné (16; 42), adjacent au siège du véhicule (10) ou agencé derrière celui-ci, une partie dudit élément de ceinture tubulaire (32) étant agencé dans l'enceinte de l'élément de ceinture (18; 40); et
3) agencement dans l'élément de ceinture tubulaire (32) d'un élément interne gonflable (31), ledit élément interne gonflable (31) comportant deux extrémités et une partie centrale, la partie centrale s'étendant à travers l'occupant et les extrémités étant fixées à l'élément de ceinture tubulaire (32);
4) fourniture d'une partie à rupture, faisant partie de l'élément de ceinture tubulaire (32), soumise à une rupture lors du gonflement de l'élément interne gonflable (31) pour permettre la sortie de cet élément interne (32) de l'élément de ceinture tubulaire (32);
5) fourniture d'un dispositif de gonflement (20), l'élément interne gonflable (31) et la partie à rupture partageant la charge de l'élément de ceinture tubulaire au cours d'une période de décélération lorsque le dispositif de gonflement (20) gonfle au moins partiellement l'élément interne gonflable (31); et
6) agencement dudit dispositif de gonflement (20) dans l'enceinte de l'élément de ceinture, en communication avec l'élément interne gonflable (31), de sorte que lors de la décélération du véhicule, le dispositif de gonflement (20) gonfle l'élément interne gonflable (31), entraînant sa sortie de ceinture tubulaire et son assistance lors de la décélération de l'occupant.

19. Procédé de retenue d'un occupant selon la revendication 18, dans lequel l'élément interne gonflable (31) s'étend à travers le torse de l'occupant.

20. Procédé de retenue d'un occupant selon la revendication 18, dans lequel l'élément interne gonflable (31) s'étend à travers l'abdomen de l'occupant.

21. Procédé de retenue d'un occupant selon la revendication 18, englobant l'étape de fourniture d'une enceinte de la ceinture (18) entre l'occupant et le point d'ancrage éloigné (16), l'élément de ceinture (13) effectuant un mouvement de va-et-vient dans cette enceinte (18).

22. Procédé de retenue d'un occupant selon la revendication 18, dans lequel le dispositif de gonflement (20) est agencé dans l'élément interne gonflable (31).

23. Procédé de retenue d'un occupant selon la revendication 18, dans lequel l'élément de ceinture tubulaire externe (32) et l'élément de ceinture interne gonflable (31) partagent la charge exercée par l'occupant décéléré avec l'élément de ceinture externe (32) supportant une charge réduite au cours de sa rupture pendant la décélération et l'élément interne (31) supportant une charge accrue après son gonflement complet.

24. Procédé selon la revendication 18, dans lequel l'élément de ceinture tubulaire externe (32) et l'élément interne gonflable (31) présentent une résistance relative à un allongement ultérieur en présence d'une charge, de sorte que la charge de traction en pourcentage supportée par la ceinture tubulaire externe (32) et la charge de traction en pourcentage de l'élément interne (31) correspondent ensemble à cent pour cent lors de différentes phases de chargement, de la décélération initiale au chargement maximal.

25. Procédé selon la revendication 18, dans lequel l'élément de ceinture tubulaire externe (32) et l'élément interne (31) présentent une résistance relative à un allongement ultérieur en présence de la charge exercée par la décélération de l'occupant, la résistance de l'élément de ceinture externe (32) étant réduite lors de sa rupture.

26. Procédé selon la revendication 18, dans lequel l'élément de ceinture tubulaire (32) englobe un tissu, la partie à rupture étant constituée par une fibre (37; 39) de ce tissu.

27. Procédé selon la revendication 18, dans lequel le partage de la charge du composant de ceinture externe (32) est réduit au cours de la première phase, le composant interne (31) résistant à 60%-90% de la charge au cours de la phase finale.

28. Procédé selon la revendication 18, dans lequel la période de décélération comprend:
une première phase, au cours de laquelle le dispositif de gonflement (20) fournit des gaz à l'élément interne gonflable (31);
une phase ultérieure, au cours de laquelle la partie à rupture est soumise à une rupture, l'élément interne gonflable (31) sortant au moins partiellement à travers la rupture; et
une phase finale au cours de laquelle l'élément interne gonflable (31) est complètement gonflé, la charge exercée sur l'élément externe (32) étant réduite de ladite première phase vers ladite phase finale.
